(19) Europäisches Patentamt / European Patent Office / Office européen des brevets

(11) **EP 1 551 109 B1**

(12) **FASCICULE DE BREVET EUROPEEN**

(45) Date de publication et mention
de la délivrance du brevet:
**25.11.2009  Bulletin 2009/48**

(51) Int Cl.:
***H04B 1/707*** *(2006.01)*

(21) Numéro de dépôt: **04290003.5**

(22) Date de dépôt: **05.01.2004**

(54) **Procédé d'élimination des faux échos dans un récepteur Rake**

Verfahren zur Unterdrückung von falschen Echos in einem Rake-Empfänger

Method of cancelling of false echoes in a Rake receiver

(84) Etats contractants désignés:
**DE FR GB IT**

(43) Date de publication de la demande:
**06.07.2005  Bulletin 2005/27**

(73) Titulaire: **STMicroelectronics N.V.**
**1118 BH  Schiphol Airport Amsterdam (NL)**

(72) Inventeur: **Bonhomme, Corinne**
**01630 Sergy (FR)**

(74) Mandataire: **Zapalowicz, Francis**
**Bureau Casalonga & Josse**
**Bayerstrasse 71/73**
**80335 München (DE)**

(56) Documents cités:
**EP-A- 0 896 438    EP-A- 1 176 733**
**WO-A-02/11304    US-A- 2002 105 375**

• **WIN M Z ET AL: "Impact of spreading bandwidth on RAKE reception in dense multipath channels" COMMUNICATION THEORY MINI-CONFERENCE, 1999 VANCOUVER, BC, CANADA 6-10 JUNE 1999, PISCATAWAY, NJ, USA,IEEE, US, 6 juin 1999 (1999-06-06), pages 78-82, XP010351113 ISBN: 0-7803-5653-5**

## Description

L'invention concerne le traitement de signaux incidents au sein d'un récepteur de signaux.

L'invention s'applique ainsi avantageusement à un récepteur qui combine plusieurs composantes de signaux multi-trajets mutuellement retardées par des retards temporels différents avant d'atteindre le récepteur.

Un tel récepteur est par exemple présent dans les systèmes de communication DSSS décrits par exemple dans le document WO 02/11304A2, ou dans les systèmes de communication sans fil à accès multiples par division de code (système CDMA), et est couramment désigné par l'homme du métier sous la dénomination de récepteur de type râteau ou récepteur « Rake ».

Dans un système de communication sans fil, une station de base communique avec une pluralité de terminaux distants, tels que des téléphones mobiles cellulaires. Les accès multiples par division de fréquence (FDMA : "Frequency-Division Multiple Access" en langue anglaise) et les accès multiples par division temporelle (TDMA : "Time Division Multiple Access" en langue anglaise) sont les schémas d'accès multiples traditionnels pour délivrer des services simultanés à un certain nombre de terminaux. L'idée de base sous-jacente aux systèmes FDMA et TDMA consiste à partager la ressource disponible, respectivement en plusieurs fréquences ou en plusieurs intervalles temporels, de telle sorte que plusieurs terminaux peuvent fonctionner simultanément sans provoquer d'interférence.

Les téléphones fonctionnant selon la norme GSM appartiennent aux systèmes FDMA et TDMA en ce sens que l'émission et la réception s'effectuent à des fréquences différentes et également à des intervalles temporels différents.

A l'opposé de ces systèmes utilisant une division de fréquence ou une division temporelle, les systèmes CDMA (Système à accès multiples par division de code; "Code Division Multiple Access" en langue anglaise) permettent aux utilisateurs multiples de partager une fréquence commune et un canal temporel commun en utilisant une modulation codée. Parmi les systèmes CDMA on peut citer le système CDMA 2000, le système WCDMA ("Wide Band CDMA" en langue anglaise; CDMA large bande) ou la norme IS-95.

Dans les systèmes CDMA, comme il est bien connu par l'homme du métier, un code d'embrouillage ("scrambling code" en langue anglaise) est associé à chaque station de base et permet de distinguer une station de base d'une autre. En outre, un code orthogonal, connu par l'homme du métier sous la dénomination de "Code OVSF", est alloué à chaque terminal distant (comme par exemple un téléphone mobile cellulaire). Tous les codes OVSF sont orthogonaux entre eux, ce qui permet de distinguer un canal d'un autre.

Avant d'émettre un signal sur le canal de transmission à destination d'un terminal distant, le signal a été embrouillé et étalé (« spread » en langue anglaise) par la station de base en utilisant le code d'embrouillage de la station de base et le code OVSF du canal.

Dans les systèmes CDMA, on peut encore distinguer ceux qui utilisent une fréquence distincte pour l'émission et la réception (système CDMA-FDD) et ceux qui utilisent une fréquence commune pour l'émission et la réception, mais des domaines temporels distincts pour l'émission et la réception (système CDMA-TDD).

L'invention s'applique avantageusement aux systèmes de communication du type CDMA, et plus particulièrement aux systèmes du type WCDMA à accès radio-terrestres (UTRA FDD/TDD).

Le signal incident reçu par un téléphone mobile par exemple, comporte différentes versions temporellement retardées du signal initialement transmis, versions ou échos qui sont le résultat des caractéristiques de transmission multi-trajets du milieu de transmission entre une station de base et le téléphone. Et, chaque trajet introduit un retard différent.

Un récepteur Rake est adapté pour les situations de multi-trajets comme décrit dans le document US 2002/0105375 A1.

Le récepteur «Rake» qui équipe un téléphone mobile cellulaire fonctionnant dans un système de communication CDMA, est utilisé pour effectuer l'alignement temporel, le désembrouillage, le désétalement, la correction canal et la combinaison des versions retardées des signaux initiaux, de façon à délivrer les flux d'informations (symboles) contenus dans les signaux initiaux.

Un récepteur « Rake » comporte plusieurs doigts, chaque doigt étant destiné à démoduler un trajet donné reçu à un instant donné.

Par ailleurs, le récepteur comporte une unité d'estimation de canal qui a pour but d'identifier les différents échos par leur retard et leur énergie moyenne ainsi qu'un mécanisme de sélection d'échos en vue de leur affectation respective aux doigts du récepteur Rake.

Généralement, le nombre d'échos détectés est supérieur à la capacité de traitement du récepteur (nombre de doigts) pour des raisons de limitation de complexité matérielle.

Aussi, utilise-t-on à l'heure actuelle un mécanisme de sélection capable de sélectionner parmi les échos détectés les N meilleurs (N étant le nombre de doigts du récepteur).

Généralement, la sélection des échos se base sur le profil de puissance mesurée par le récepteur. Plus précisément, le récepteur estime la réponse impulsionnelle du canal en se basant sur le signal pilote émis par la station de base. De cette réponse impulsionnelle, il forme son énergie qu'on appelle « profil de puissance » et liste de manière non cohérente cette estimation sur une durée de mesure donnée.

On estime ensuite à partir de ce profil de puissance, les échos qui constituent le profil de propagation radio entre la station de base et le récepteur mobile.

Généralement, on associe les doigts aux N maxima du profil de puissance, tout en rejetant tout autre maximum qui serait proche d'un maximum retenu d'une durée inférieure à la durée d'un fragment (« chip », en langue anglaise).

On rappelle à cet égard que dans les systèmes CDMA notamment, les symboles sont émis au sein de trames successives, chaque trame étant subdivisée en un certain nombre d'intervalles temporels (slots). Chaque intervalle temporel véhicule un certain nombre de symboles, chaque symbole étant constitué d'un nombre prédéterminé de fragments (« Chips »).

Ce procédé de sélection des échos fonctionne bien dans le cas où le profil de propagation radio présente des échos effectivement séparés de plus d'une durée d'un fragment. Cependant, dans le cas où l'on est en présence d'échos proches, il y a une perte irrémédiable due à l'exclusion de tels échos.

En conséquence, si l'on veut augmenter les performances du récepteur, on est conduit à rechercher des maxima dans le profil de puissance sans appliquer le principe du rejet précédemment décrit.

Mais, on se trouve confronté au problème de sélectionner des faux échos, c'est-à-dire des échos qui, du fait du suréchantillonnage, ne sont rien d'autre que des répliques du filtre de mise en forme et qui donc n'apportent aucune information supplémentaire.

Si un tel faux écho est effectivement sélectionné et affecté à un doigt du récepteur, il en résulte alors une consommation d'énergie inutile et pire encore, en raison de la limitation de la complexité matérielle du récepteur, l'exclusion de l'utilisation d'autres vrais échos moins puissants que le faux écho sélectionné, mais qui apportent plus d'informations.

Il en résulte au final une baisse des performances du récepteur.

L'invention vise à apporter une solution à ce problème.

L'invention a ainsi pour but l'amélioration des performances d'un récepteur du type « Rake » pour des profils denses de propagation radio, en particulier pour des téléphones mobiles de nouvelle génération destinés à recevoir des paquets de données à haute vitesse (HSDPA : « High speed data paquet »).

En effet, avec les systèmes HSDPA, on peut rencontrer des échos extrêmement proches, c'est-à-dire temporellement espacés d'une durée inférieure à la durée d'un fragment (« Chip », en langue anglaise).

L'invention a ainsi notamment pour but d'introduire un critère de rejet afin de détecter ces faux échos.

L'invention propose un procédé de traitement d'un signal émanant d'un milieu de transmission multitrajets, comprenant une détection d'échos du signal reçu.

Selon une caractéristique générale de l'invention, le procédé comporte en outre un traitement de rejet comportant une estimation de l'intercorrélation entre les échos temporellement voisins, et si cette intercorrélation satisfait à un test prédéterminé, il est prévu le rejet de celui des deux échos voisins présentant l'énergie la plus faible.

Selon un mode de mise en oeuvre de l'invention, lorsque le signal reçu véhicule des symboles, chaque symbole étant constitué d'un nombre prédéterminé de fragments, deux échos sont déclarés voisins lorsqu'ils sont temporellement espacés d'une durée inférieure à la durée d'un fragment.

Lorsque le signal reçu véhicule des symboles au sein de trames successives, chaque trame étant subdivisée en un certain nombre d'intervalles temporels ( « slots », en langue anglaise) on effectue avantageusement une estimation de l'intercorrélation sur un nombre choisi d'intervalles temporels, par exemple de l'ordre de la centaine pour les systèmes CDMA.

Selon un mode de mise en oeuvre de l'invention, l'estimation de l'intercorrélation entre deux échos voisins comporte le calcul d'un coefficient d'intercorrélation normalisé obtenu à partir des amplitudes complexes et des énergies des deux échos.

Le test prédéterminé comporte par exemple la comparaison du coefficient d'intercorrélation normalisé à un seuil prédéterminé. Ce seuil est choisi de manière à ce que la probabilité de rejeter les faux doigts soit la plus forte possible.

A titre indicatif, lorsqu'on prend le module de la corrélation entre deux candidats potentiels, la valeur absolue de la différence entre ledit coefficient d'intercorrélation normalisé et 1 est comparée à 0,3. Et, si cette valeur absolue est inférieure à 0,3, alors on rejette celui des deux échos voisins présentant l'énergie la plus faible.

En général, le nombre d'échos détectés est supérieur au nombre de doigts d'un récepteur Rake. Lorsqu'il en est ainsi, le nombre d'échos résiduels après rejet correspond dans certains cas, au nombre de doigts du récepteur Rake. Dans ce cas, on alloue respectivement ce échos résiduels aux doigts du récepteur Rake.

Par contre, dans d'autres cas, alors que le nombre d'échos détectés du signal est égal à L0, L0 étant supérieur au nombre N de doigts du récepteur Rake, le nombre d'échos résiduels issus du traitement de rejet est égal à L, et L est toujours supérieur à N.

Dans ce cas, il faut sélectionner parmi les L échos résiduels, N échos qui seront respectivement alloués aux doigts du récepteur.

Ceci peut se faire par toute méthode classique, par exemple en utilisant un critère basé sur le rapport signal à bruit.

Un tel critère fournit une bonne solution tant que la séparation minimale entre les différents échos résiduels du profil de propagation radio reste relativement importante. Mais, lorsque l'on souhaite augmenter les performances du récepteur, il convient de prendre en compte les échos voisins résiduels qui sont donc des vrais échos, mais qui sont temporellement corrélés.

Plus précisément, selon une variante de mise en oeuvre de l'invention dans laquelle le nombre d'échos détectés du signal reçu est d'égal à L0, L0 étant supérieur à N (nombre de doigts du récepteur Rake) et dans laquelle le nombre d'échos résiduels issus du traitement de rejet est égal à L, L étant supérieur à N, certains au moins des L0 échos résiduels étant des échos temporellement corrélés selon un critère de corrélation prédéterminé, l'étape de sélection comporte

- une détermination à partir des amplitudes complexes initiales associées à au moins les échos temporellement corrélés, d'énergies individuelles pondérées correspondant respectivement à des échos virtuels temporellement décorrélés, et
- la sélection de N échos parmi les L échos en fonction d'un critère de puissance prédéterminé prenant en compte au moins lesdites énergies individuelles pondérées.

En d'autres termes, la nouvelle représentation à l'aide des énergies individuelles pondérées fournit une représentation équivalente mais avec des évanouissements (« fading », en langue anglaise) indépendants et une nouvelle répartition de puissance sur ces échos. Le fait que les nouveaux échos virtuels soient indépendants permet alors d'appliquer un critère basé sur des puissances mais en utilisant cette fois-ci des puissances modifiées. Et on peut montrer mathématiquement que cette nouvelle représentation n'affecte ni le bruit ni l'énergie de l'ensemble du processus représenté par les L échos.

Selon un mode de mise en oeuvre de l'invention, lorsque le signal reçu véhicule des symboles, chaque symbole étant constitué d'un nombre prédéterminé de fragments, deux échos sont déclarés temporellement corrélés lorsqu'ils sont temporellement espacés d'une durée inférieure à la durée d'un fragment.

Plusieurs variantes de mise en oeuvre de l'invention peuvent être envisagées.

Selon une première variante, on peut déterminer les énergies individuelles pondérées à partir des amplitudes complexes initiales de l'ensemble des L échos.

Ainsi, par exemple, dans l'étape de sélection on définit toutes les combinaisons possibles de N échos parmi les L échos résiduels, et pour chacune des combinaisons, on calcule un jeu de N énergies individuelles pondérées à partir des amplitudes complexes initiales des N échos de ladite combinaison. On calcule également pour la combinaison considérée, la somme de ces N énergies individuelles pondérées. Et, on sélectionne la combinaison de N échos dont ladite somme associée est la plus grande.

Le calcul du jeu de N énergies individuelles pondérées associées à une combinaison de N échos comporte par exemple la détermination de la matrice de covariance des amplitudes complexes initiales desdits N échos, et la détermination des N valeurs propres de ladite matrice de covariance.

La mise en oeuvre d'une telle variante lorsque le nombre N est relativement grand, par exemple supérieur à quatre, devient complexe en raison notamment de la grande taille de la matrice de covariance que l'on doit d'abord estimer sur la base de mesure sur les échos et ensuite diagonaliser. Cette complexité est relativement grande pour les récepteurs CDMA usuels.

Aussi, est-il prévu une autre variante de mise en oeuvre de l'invention, beaucoup plus adaptée pour des cas plus concrets de profils de propagation.

Selon cette variante, on peut ainsi regrouper les échos en une famille d'échos denses (c'est-à-dire temporellement corrélés) et une famille d'échos épars (c'est-à-dire lointains).

En d'autres termes, selon cette variante de l'invention, dans l'hypothèse où les L échos résiduels comportent L1 échos temporellement corrélés et L-L1 échos éventuels restant dits « éloignés », L1 étant supérieur ou égal à 2 et inférieur ou égal à L, l'étape de sélection comporte une première sélection selon un premier critère de sélection de L2 échos parmi les L1 échos, L2 étant inférieur ou égal à L1.

A titre indicatif, dans le cas où L1 est un nombre impair, on éliminera ainsi au moins un des L1 échos temporellement corrélés de façon à obtenir un nombre L2 pair. Si par contre L1 est déjà pair, alors on pourra choisir L2=L1 et n'effectuer aucune première sélection.

Il est par ailleurs prévu une détermination à partir des amplitudes complexes initiales des L2 échos, des énergies individuelles pondérées correspondant respectivement à des échos virtuels temporellement décorrélés, ainsi qu'une affectation de ces énergies individuelles pondérées aux L2 échos sélectionnés.

Puis, on sélectionne parmi les L2 échos et les L-L1 échos éloignés, les N échos en fonction d'un critère de puissance prédéterminé prenant en compte lesdites L2 énergies individuelles pondérées et les L-L1 énergies individuelles initiales des L-L1 échos restants éventuels.

Lorsque le nombre L2 est pair, on traite avantageusement les L2 échos par paires. Ainsi, par exemple, pour chaque paire d'échos on calcule une paire d'énergies individuelles pondérées à partir des amplitudes complexes initiales de la paire d'échos et on sélectionne les N échos ayant les N plus grandes valeurs d'énergie parmi les L2 énergies individuelles pondérées et les L-L1 énergies individuelles initiales des éventuels L-L1 échos éloignés.

Le calcul d'une paire d'énergies individuelles pondérées associée à une paire d'échos comporte par exemple la détermination de la matrice de covariance des amplitudes complexes initiales desdits échos, et la détermination des deux valeurs propres de ladite matrice de covariance.

L'invention propose également un récepteur du type « Rake », comprenant une entrée pour recevoir un signal émanant d'un milieu de transmission multitrajets, et des moyens de détection d'échos du signal reçu.

Selon une caractéristique générale de l'invention, le récepteur comprend des moyens de traitement comportant des moyens d'estimation aptes à effectuer une estimation de l'intercorrélation de échos temporellement voisins, et des moyens de rejet aptes, si cette intercorrélation satisfait à un test prédéterminé, à rejeter celui de deux échos voisins présentant l'énergie la plus faible.

Selon un mode de réalisation de l'invention dans lequel le signal reçu véhicule des symboles au sein de trames successives, chaque trame étant subdivisée en un faible nombre d'intervalles temporels, les moyens d'estimation sont aptes à effectuer l'estimation de l'intercorrélation sur un nombre choisi d'intervalles temporels, par exemple de l'ordre de la centaine.

Les moyens d'estimation comportent par exemple des moyens aptes à calculer un coefficient d'intercorrélation normalisé obtenu à partir des amplitudes complexes et des énergies des deux échos.

Les moyens de rejet comportent par exemple des moyens de comparaison aptes à comparer le coefficient d'intercorrélation normalisé à un seuil prédéterminé.

Lorsque le nombre d'échos résiduels après rejet correspond au nombre de doigts du récepteur Rake, les moyens de traitement comportent une unité apte à allouer respectivement ces échos résiduels aux doigts du récepteur Rake.

Par contre, lorsque les moyens de détection détectent un nombre L0 d'échos du signal reçu, L0 étant supérieur à N, et que les moyens de rejet délivrent L échos résiduels, L étant également supérieur à N, et certains au moins des L échos étant des échos temporellement corrélés selon un critère de corrélation prédéterminé, selon une variante de l'invention, les moyens de traitement comportent

-   des moyens de calcul aptes à déterminer à partir des amplitudes complexes initiales associées à au moins les échos temporellement corrélés, des énergies individuelles pondérées correspondant respectivement à des échos virtuels temporellement décorrélés, et
-   des moyens de sélection aptes à sélectionner N échos parmi les L échos en fonction d'un critère de puissance prédéterminé prenant en compte au moins lesdites énergies individuelles pondérées.

Selon un mode de réalisation de l'invention, les moyens de détermination sont aptes à déterminer des énergies individuelles pondérées à partir des amplitudes complexes initiales de l'ensemble des L échos.

Selon un mode de réalisation de l'invention, les moyens de calcul sont aptes à définir toutes les combinaisons possibles de N échos parmi les L échos résiduels, et pour chacune des combinaisons, à calculer un jeu de N énergies individuelles pondérées à partir des amplitudes complexes initiales des N échos de ladite combinaison, ainsi que la somme de ces N énergies individuelles pondérées, et les moyens de sélection sélectionnent la combinaison de N échos dont ladite somme associée est la plus grande.

Selon un mode de réalisation de l'invention, les moyens de calcul sont aptes, pour le calcul du jeu de N énergies individuelles pondérées associé à une combinaison de N échos, à déterminer la matrice de covariance des amplitudes complexes initiales desdits N échos, et à déterminer les N valeurs propres de ladite matrice de covariance.

Selon une autre variante de l'invention, les L échos résiduels comportant L1 échos temporellement corrélés, et L-L1 échos éventuels restants dits éloignés, L1 étant supérieur ou égal à 2 et inférieur ou égal à L, les moyens de traitement comportent des moyens de sélection auxiliaires aptes à effectuer une première sélection selon un premier critère de sélection de L2 échos parmi les L1 échos, L2 étant inférieur ou égal à L1.

Les moyens de calcul sont aptes à déterminer à partir des amplitudes complexes initiales des L2 échos, des énergies individuelles pondérées correspondant respectivement à des échos virtuels temporellement décorrélés et à affecter ces énergies individuelles pondérées aux L2 échos sélectionnés. Et les moyens de sélection sont aptes à sélectionner les N échos parmi les L2 échos et les L-L1 échos éloignés, en fonction d'un critère de puissance prédéterminé prenant en compte lesdites énergies individuelles pondérées et les L-L1 énergies individuelles des L-L1 échos restants.

Dans le cas où L1 est un nombre impair, les moyens de sélection auxiliaires sont par exemple aptes à éliminer au moins un des L1 échos temporellement corrélés, de façon à obtenir un nombre L2 pair.

Selon un mode de réalisation de l'invention, les moyens de calcul sont aptes à traiter les L2 échos par paire. Pour chaque paire d'échos, les moyens de calcul sont aptes à calculer une paire d'énergies individuelles pondérées à partir des amplitudes complexes initiales de la paire d'échos, et les moyens de sélection sélectionnent les N échos ayant les N plus grandes valeurs d'énergie parmi les L2 énergies individuelles pondérées et les L-L1 énergies individuelles initiales des éventuels L-L1 échos éloignés.

Selon un mode de réalisation de l'invention, pour le calcul d'une paire d'énergies individuelles pondérées associée à une paire d'échos, les moyens de calcul sont aptes à déterminer la matrice de covariance des amplitudes complexes initiales desdits échos, et à déterminer les 2 valeurs propres de ladite matrice de covariance.

L'invention propose également un composant d'un système de communication sans fil, incorporant un récepteur tel que défini ci-avant.

Ce composant peut être par exemple un téléphone mobile cellulaire.

D'autres avantages et caractéristiques de l'invention apparaîtront à l'examen de la description détaillée de modes de mise en oeuvre et de réalisation, nullement limitatifs, et des dessins annexés sur lesquels :

-   la figure 1 illustre schématiquement un téléphone mobile cellulaire selon l'invention, incorporant un récepteur Rake selon l'invention,

- les figures 2 à 4 illustrent schématiquement les fonctionnalités et une architecture interne d'un récepteur Rake selon l'invention,
- la figure 5 illustre plus en détail une première variante de moyens de traitement d'un récepteur Rake selon l'invention,
- les figures 6 et 7 illustrent un mode de mise en oeuvre d'un procédé selon l'invention,
- la figure 8 illustre un autre mode de réalisation de moyens de traitement d'un récepteur Rake selon l'invention,
- la figure 9 illustre un autre mode de mise en oeuvre d'un procédé selon l'invention, et
- la figure 10 illustre schématiquement un autre mode de mise en oeuvre d'un procédé selon l'invention.

Le téléphone mobile cellulaire TP comprend, de façon classique, un étage analogique radiofréquence ERF connecté à une antenne ANT pour recevoir un signal d'entrée ISG.

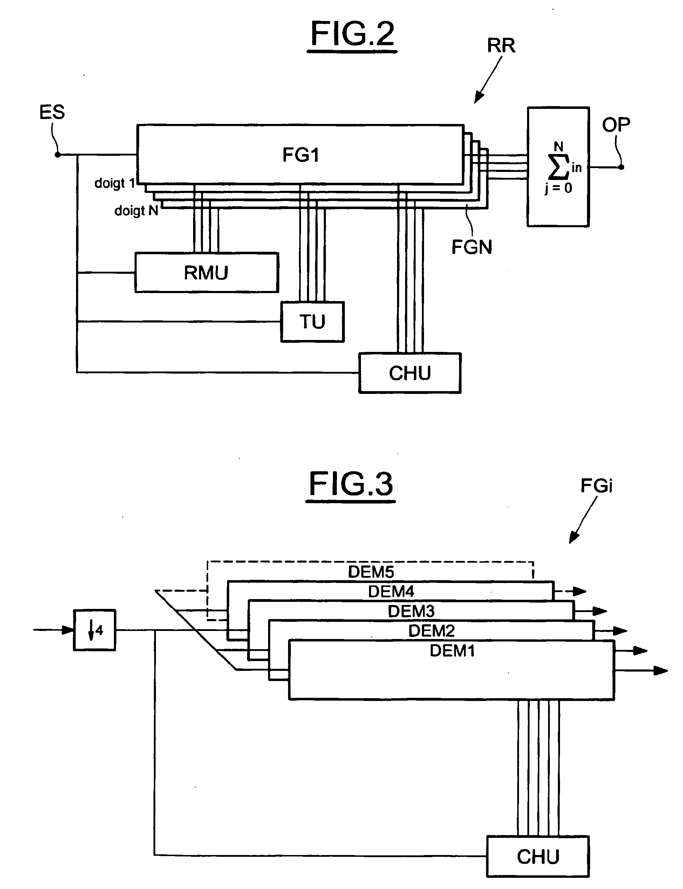

Classiquement, l'étage ERF comprend un amplificateur faible bruit LNA et deux voies de traitement comportant des mélangeurs, des filtres et amplificateurs classiques (non représentés sur la figure 2 à des fins de simplification). Les deux mélangeurs reçoivent respectivement de la part d'une boucle à verrouillage de phase PLL deux signaux présentant mutuellement une différence de phase de 90°. Après transposition de fréquence dans les mélangeurs, les deux voies de traitement définissent respectivement deux flux I (flux direct) et Q (flux en quadrature) selon une dénomination bien connue de l'homme du métier.

Après conversion numérique dans des convertisseurs analogiques/numériques, les deux flux I et Q sont délivrés à un étage de traitement de réception ETNR.

Cet étage de traitement ETNR comprend un récepteur RR, communément désigné par l'homme du métier "récepteur Rake", suivi par des moyens classiques de démodulation MP qui effectuent la démodulation de la constellation délivrée par le récepteur Rake RR. Les moyens MP sont suivis d'un décodeur canal classique CD.

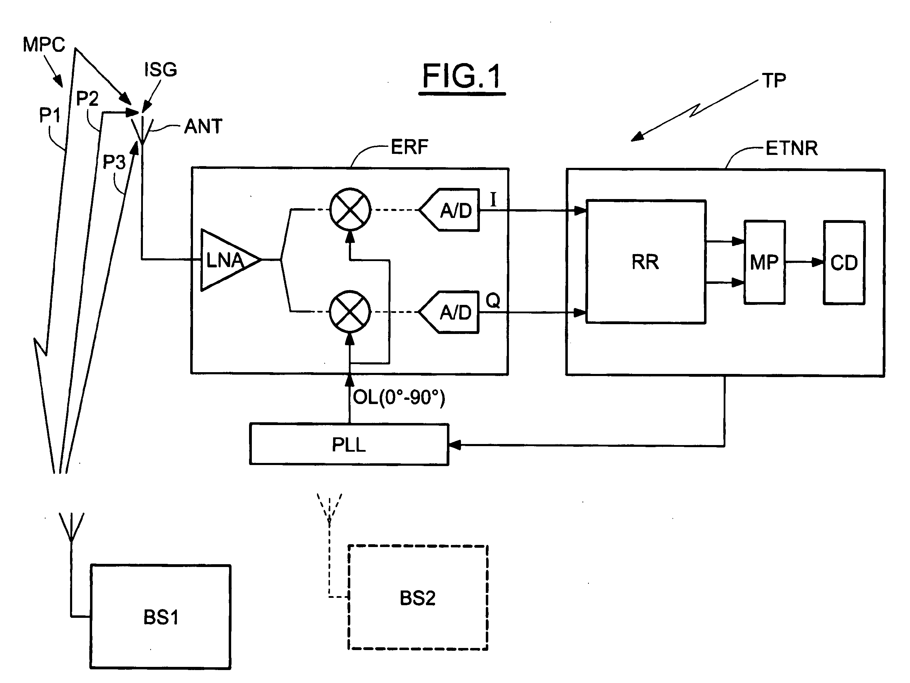

En raison des réflexions possibles du signal initialement transmis, sur des obstacles se situant entre la station de base et le téléphone mobile, le milieu de transmission est en fait un milieu de transmission multi-trajets MPC, c'est-à-dire comprenant plusieurs chemins de transmission différents (trois chemins de transmission P1, P2, P3 sont représentés sur la figure 1). En conséquence, le signal ISG qui est reçu par le téléphone mobile comporte différentes versions temporellement retardées du signal initialement transmis, versions ou échos qui sont le résultat des caractéristiques de transmission multi-trajets du milieu de transmission. Et, chaque trajet introduit un retard différent. Bien entendu, le signal reçu ISG pourrait également résulter de la transmission de signaux initiaux respectivement émis par différentes stations de base BS1 et BS2.

La figure 2 illustre schématiquement les fonctionnalités de base du récepteur « Rake » RR.

Celui-ci est formé de plusieurs doigts (ici N doigts) FG1-FGN. Chaque doigt est destiné à démoduler un trajet donné reçu à un instant donné. La démodulation en bande de base consiste essentiellement en un désembrouillage et un désétalement. Le désétalement est en réalité une corrélation et requiert en conséquence une intégration sur la période symbole. Le récepteur combine ensuite les informations reçues sur chaque doigt dans des moyens de combinaison MCMB, en les sommant après avoir corrigé les distorsions de phase et d'amplitude de chaque trajet (unité CHU décrite ci-après). Bien entendu, les doigts multiples représentés sur la figure 2 peuvent être formés du même doigt physique, reconfiguré N fois pour réaliser les N doigts fonctionnels.

Le récepteur comporte également une unité CHU capable de fournir une estimation du canal de transmission, et ce dans le but notamment de corriger les distorsions du canal.

Il est nécessaire d'allouer N trajets (échos) aux doigts du récepteur. Ceci est effectué par une unité de commande RMU de structure connue, après sélection de N échos.

Enfin, puisque le « timing » relatif des trajets peut varier dans le temps, une unité de suivi (tracking unit) de structure également connue, suit le « timing » des trajets et met à jour les doigts avec cette information.

Sur la figure 3, on voit que chaque doigt FGi comporte un générateur de code CG capable de produire notamment les codes d'embrouillage et les codes OVSF, un sous-échantillonneur, en l'espèce un sous-échantillonneur par quatre, disposé à l'entrée du doigt, ainsi qu'une unité d'estimation de canal CHU.

Par ailleurs, le doigt FGi comporte plusieurs démodulateurs de canaux de transmission physiques, en l'espèce cinq démodulateurs DEM1-DEM5. Chaque démodulateur de canal réalise les fonctions de désembrouillage, de désétalement, d'intégration ainsi que les fonctions de correction de canal évoquées précédemment. L'unité CHU est partagée par tous les canaux de transmission physiques.

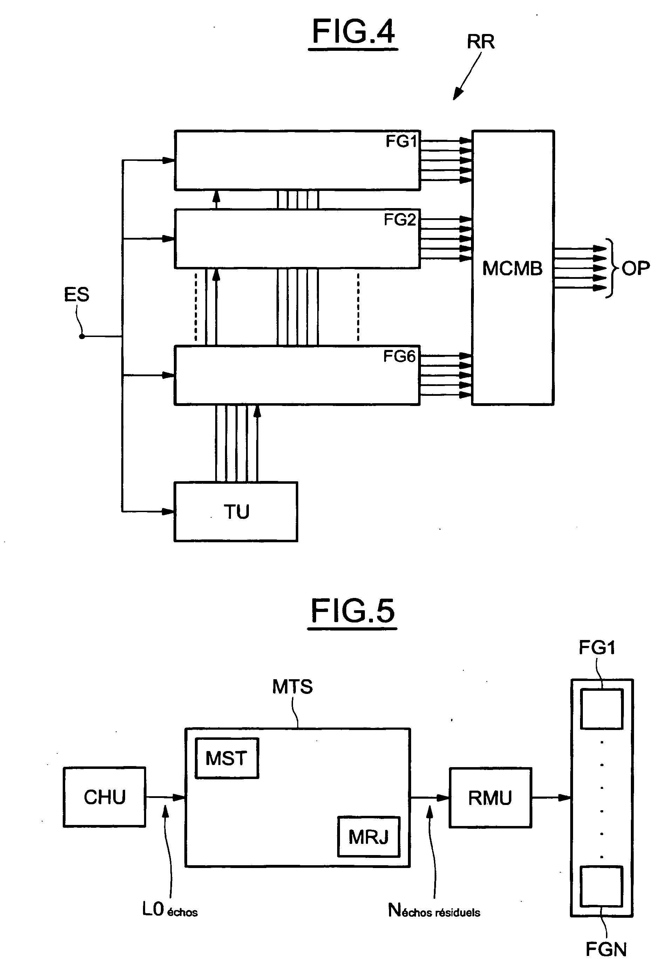

Si l'on se réfère maintenant à la figure 4, qui illustre partiellement un exemple d'architecture interne d'un récepteur « Rake »RR, on voit que l'on retrouve entre l'entrée de signal ES et la sortie OP qui délivre les informations relatives aux différents canaux physiques de transmission (en l'espèce ici cinq canaux physiques), les doigts du récepteur, ici les six doigts FG1-FG6, connectés en sortie aux moyens de combinaison MCMB.

Sur la figure 5, on voit que l'unité CHU a détecté par exemple L0 échos caractérisés chacun par son retard t, son amplitude complexe (amplitude et phase) s et son énergie individuelle dite « initiale », qui est égale au produit de s et de son conjugué complexe (s.s*).

Ces L0 échos ont été détectés de façon classique, à la suite d'une estimation de la réponse impulsionelle du canal, en utilisant par exemple la méthode des maxima locaux.

Des moyens de traitement MTS par exemple réalisés de façon logicielles, vont alors déterminer parmi les L0 échos détectés, d'éventuels faux échos qui ne seraient rien d'autre que des répliques du filtre de mise en forme et qui donc n'apporteraient aucune information supplémentaire.

A cet égard, des moyens d'estimation MST vont effectuer un traitement d'estimation de l'intercorrélation entre des échos temporellement voisins. Par ailleurs, si cette intercorrélation satisfait à un test prédéterminé, des moyens de rejet MRJ vont rejeter celui des deux échos voisins présentant l'énergie la plus faible.

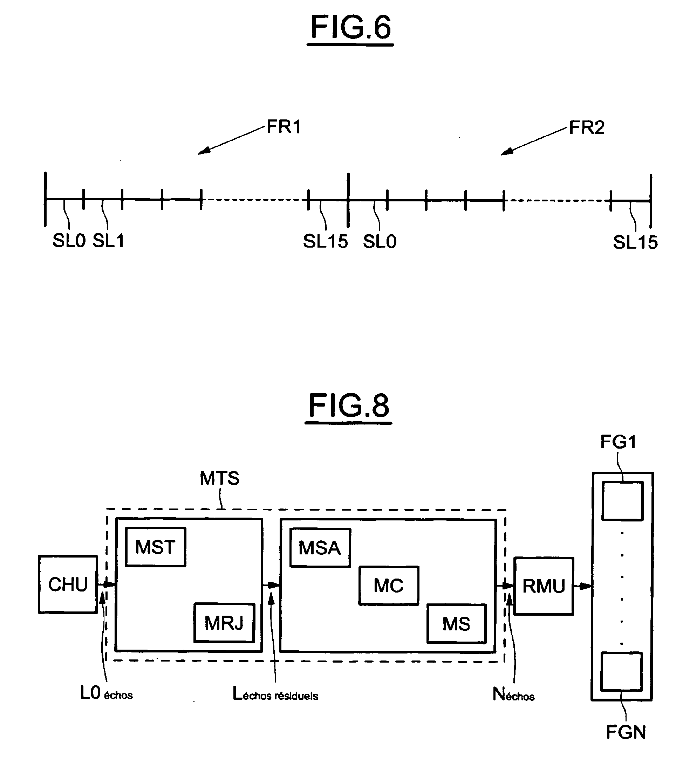

Dans les applications CDMA notamment, les informations transmises entre une station de base et un téléphone mobile cellulaire, sont véhiculées au sein de trames successives FRi (figure 6). Chacune de ces trames est divisée en un certain nombre d'intervalles temporels ou « slots » SLi (16 slots par trame par exemple).

Par ailleurs, chaque symbole véhiculé est constitué d'un nombre prédéterminé de fragments (« chips »). A titre indicatif, dans un système CDMA, la durée d'un fragment peut être égale à 260,417 nanosecondes.

Bien qu'il soit possible d'adopter plusieurs critères pour définir ce que l'on entend par « deux échos voisins », une façon particulièrement simple consiste à utiliser la durée d'un fragment. Ainsi, deux échos seront déclarés voisins lorsqu'ils sont temporellement espacés d'un durée inférieure à la durée d'un fragment.

Considérons maintenant deux échos voisins F1 et F2 qui ont été détectés en sortie de l'unité CHU, une fois l'estimation de canal stabilisée.

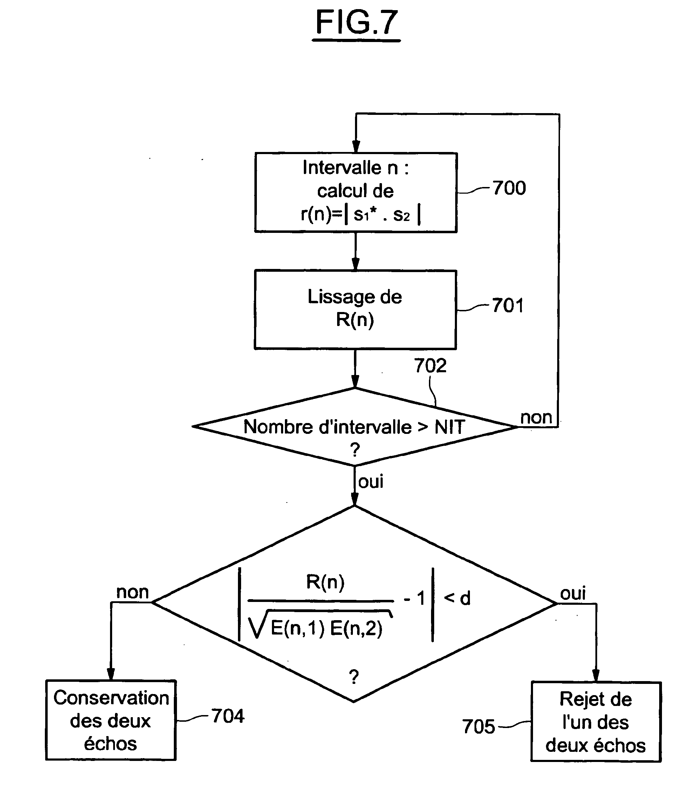

Lors de l'intervalle n (étape 700, figure 7), on calcule pour les deux échos F1 et F2 un coefficient élémentaire d'intercorrélation r(n) égal au module du produit de l'amplitude complexe de l'un des échos par le conjugué complexe de l'amplitude de l'autre écho.

Puis, on effectue (étape 701) un lissage de l'intercorrélation d'un intervalle à l'autre.

Ce lissage peut consister en une moyenne simple ou bien en un lissage exponentiel. Ainsi, si un lissage exponentiel est utilisé, alors on définit un coefficient d'intercorrélation lissé R(n) égal à $\alpha$R(n)+(1-$\alpha$).r(n), où $\alpha$ est le coefficient de lissage exponentiel égal par exemple à 0,98.

Au bout d'une durée prédéterminée, c'est-à-dire dans le cas présent au bout d'un certain nombre NIT d'intervalles (slots) (étape 702), on procède dans l'étape 703 à un test d'intercorrélation.

A titre indicatif, dans une application UMTS, le nombre NIT est de l'ordre de la centaine.

Le test effectué dans l'étape 703 comporte la comparaison d'un coefficient d'intercorrélation normalisé à un seuil prédéterminé.

Ce coefficient d'intercorrélation normalisé est obtenu en divisant le coefficient R(n) par la racine carrée du produit de l'énergie lissée associée à l'écho F1 et de l'énergie lissée associée à l'écho F2.

Plus précisément, l'énergie lissée E(n,1) associée à l'écho F1 est égale par exemple à la moyenne des énergies de l'écho F1 sur l'ensemble des NIT intervalles considérés.

Il en est de même pour l'énergie lissée E(n,2) associée à l'écho F2.

La valeur absolue de la différence entre ce coefficient normalisé et 1 est alors comparée au seuil d, qui est par exemple égal à 0,3.

Si le test effectué à l'étape 703 se trouve vérifié, on rejette de la liste des échos candidats le plus faible des échos (étape 701) c'est-à-dire celui qui présente l'énergie lissée la plus faible.

Si par contre le test effectué à l'étape 703 n'est pas vérifié, alors cela signifie que les deux écho voisins sont effectivement deux deux vrais échos. Dans ce cas, on les conserve tous les deux(étape 704).

Dans l'exemple qui vient d'être décrit, pour calculer coefficient d'intercorrélation normalisé, on prend le module entre deux candidats potentiels et on le lisse avant de le normaliser. Cependant on pourrait très bien lisser les valeurs complexes avant d'en prendre le module ou encore en prendre le module au carré, lisser l'énergie et normaliser l'énergie et non pas la racine carrée. En d'autres termes toutes ces formulations sont équivalentes et permettent de définir un coefficient d'intercorrélation normalisé. Et suivant la formulation choisie, le seuil sera différent. Ainsi dans le cas où l'on utilise l'énergie et non le module, la valeur de seuil serait égale par exemple à 0,1 au lieu de 0,3.

Par ailleurs, dans l'exemple qui vient d'être décrit et illustré sur la figure 5 notamment, on a supposé que après traitement de rejet, il subsiste N échos résiduels. Puisque ce nombre d'échos résiduels est égal au nombre de doigt du récepteur Rake, l'unité RMU va alors allouer respectivement ces N échos résiduels aux N doigts du récepteur Rake.

Cela étant, dans d'autres cas, comme illustré par exemple sur la figure 8, le nombre d'échos résiduels L peut rester supérieur au nombre de doigts N du récepteur Rake.

Dans ce cas, les moyens de traitement MTS, vont alors sélectionner parmi ces L échos résiduels, les N échos qui seront ensuite affectés aux doigts du récepteur Rake par l'unité RMU.

Il est alors prévu différents blocs logiciels, à savoir des moyens de sélection auxiliaires MSA, des moyens de calcul MC et des moyens de sélection MS dont on reviendra plus en détail ci-après sur les fonctions.

Parmi ces L échos résiduels, certains d'entre eux, éventuellement tous, peuvent être encore des échos rapprochés ou voisins, c'est-à-dire des échos temporairement corrélés.

Là encore, une façon particulièrement simple, mais non limitative, pour définir ce que l'on entend par « deux échos temporellement corrélés » consiste à utiliser la durée d'un fragment. Deux échos seront donc déclarés dans ce mode de réalisation, temporellement corrélés, lorsqu'ils sont temporellement espacés d'une durée inférieure à la durée d'un fragment.

Les évanouissements (« fadings », en langue anglaise) qui affectent les L échos qu'on considère généralement comme gaussiens complexes ne sont pas indépendants et on peut leur associer leur matrice de covariance K. Cette matrice de dimension L x L est représentée par ses éléments A(i,j)=E[s(i)s(j)*], où E désigne l'opérateur « espérance mathématique », et $^*$ désigne le conjugué complexe.

Quand les échos sont relativement séparés, c'est-à-dire non temporellement corrélés, avec par exemple une séparation minimale supérieure à la durée d'un fragment, alors cette matrice est pratiquement diagonale et ses éléments diagonaux sont constitués des énergies moyennes individuelles initiales des échos. Et l'on obtient une représentation uniquement à l'aide de ces énergies individuelles initiales.

Cependant, pour des échos denses, la matrice de covariance ne peut plus être assimilée à une matrice diagonale. Aussi, l'invention prévoit elle une nouvelle représentation des L échos, cette nouvelle représentation, équivalente à la précédente, mettant en oeuvre des échos virtuels temporellement décorrélés associés à des évanouissements indépendants, ainsi qu'une nouvelle répartition de puissance sur ces échos.

Le fait que les nouveaux échos (échos virtuels) soient indépendants permet alors d'appliquer un critère de puissance non pas sur les énergies individuelles initiales mais sur les énergies individuelles pondérées de ces nouveaux échos.

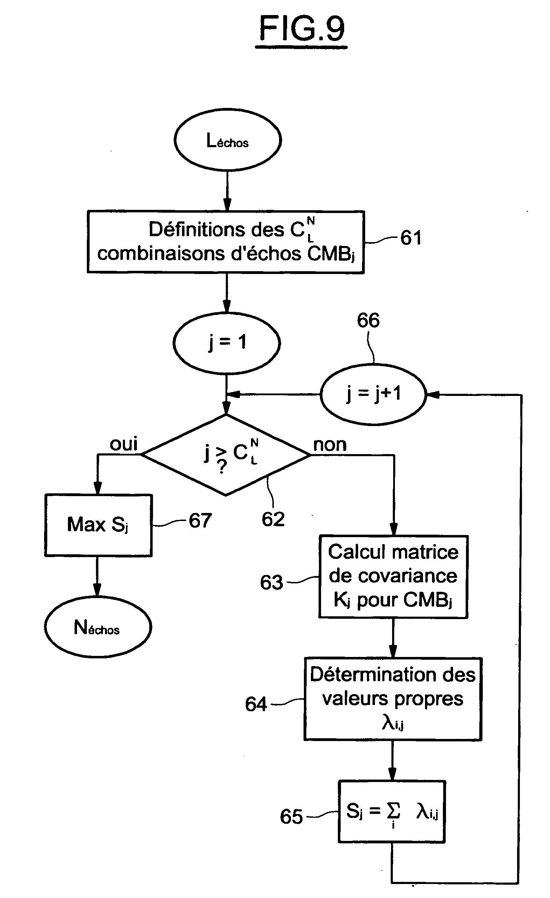

Plus précisément, selon une première variante de mise en oeuvre du procédé selon l'invention, illustrée sur la figure 9, on prend en compte l'ensemble des L échos, qu'ils soient temporellement corrélés ou non, pour calculer des énergies individuelles pondérées correspondant à des échos virtuels temporellement décorrélés.

Cela étant, en pratique, le simple calcul des valeurs propres fait perdre le lien entre l'écho et la valeur propre qui lui est associée et donc il devient alors difficile de décider quels échos conserver.

La variante de mise en oeuvre illustrée sur la figure 9 apporte une solution à ce problème.

A cet égard, on définit dans une étape 61, toutes les combinaisons possibles de N échos parmi L de façon à obtenir $C_L^N$ combinaison CMB$_j$.

Puis, pour chacune de ces combinaisons CMB$_j$, on calcule (étape 63) la matrice de covariance associée K$_j$.

On détermine ensuite de façon classique les N valeurs propres $\lambda_j$ associées aux N échos de la combinaison considérée (étape 64).

Ces valeurs propres constituent lesdites énergies individuelles pondérées.

Puis, dans une étape 65, on calcule la somme de ces énergies individuelles pondérées de façon à obtenir une somme S$_j$ associée à la combinaison considérée de N échos.

Lorsque toutes les combinaisons ont été traitées, on détermine (étape 67) quelle est la somme maximale et l'on va alors sélectionner les N échos de la combinaison associée à cette somme maximale.

Fonctionnellement, ce sont les moyens de calcul MC incorporés dans les moyens de traitement MTS, qui effectuent les étapes 63 à 65 tandis que l'étape 67 est effectuée par les moyens de sélection MS.

Cela étant, la mise en oeuvre d'une telle variante devient relativement compliquée lorsque le nombre de doigts est relativement grand, par exemple supérieur à quatre. C'est le cas pour les récepteurs CDMA usuels.

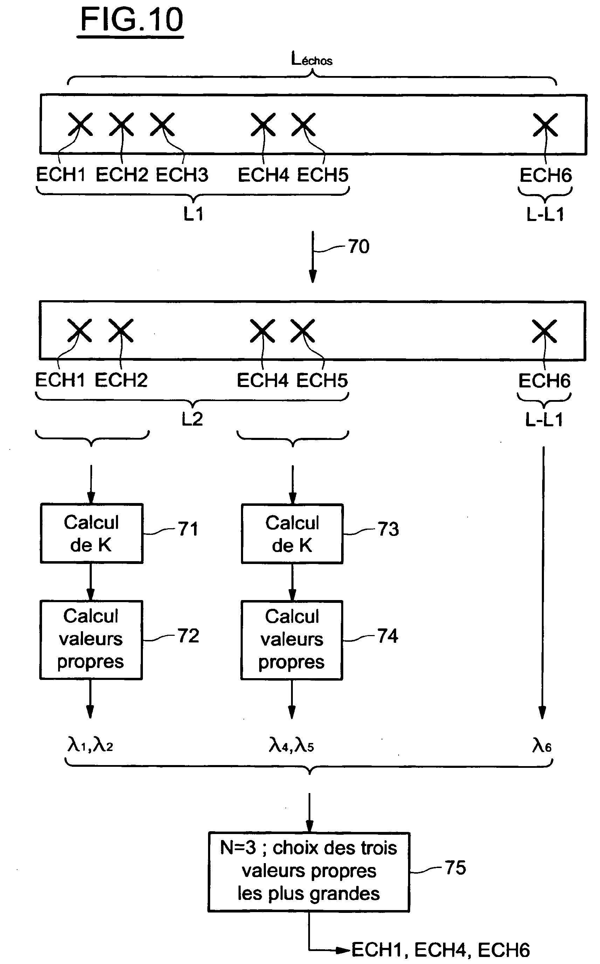

Aussi, l'invention propose-t-elle une autre variante de mise en oeuvre qui permet d'approximer le calcul complet pour les cas les plus concrets de profils de propagation. Un telle variante de mise en oeuvre est illustrée sur la figure 10.

D'un façon générale, on va regrouper les échos en une famille d'échos denses (temporellement corrélés) et d'échos restants (éventuels), c'est-à-dire des échos lointains. Puis, on va appliquer la procédure de calcul des énergies individuelles pondérées sur la famille d'échos denses et garder intact le reste des échos.

Plus précisément, si l'on considère L échos (6 sur la figure 10) et trois doigts (N=3) on voit que les L échos comportent cinq échos denses ECH1-ECH5 formés de deux familles ECH1-ECH3 et ECH4-ECH5, ainsi qu'un écho lointain ECH6.

Les moyens de sélection auxiliaires MSA des moyens de traitement MTS vont alors avantageusement éliminer un écho dense parmi les cinq échos ECH1-ECH5. Et, plus précisément, puisque l'on va travailler par paires d'échos ultérieurement, les moyens de sélection auxiliaires MSA vont supprimer un écho parmi la famille des trois premiers échos ECH1-ECH3. Cette suppression peut s'effectuer selon un critère de puissance. On pourra par exemple éliminer l'écho ayant l'énergie individuelle initiale la plus faible.

On suppose alors après l'étape de présélection 70 que l'on obtient L2 échos temporellement corrélés formés de deux paires d'échos ECH1-ECH2 d'une part et ECH4-ECH5 d'autre part, ainsi qu'un écho restant ECH6.

Les moyens de calcul vont alors déterminer pour la paire d'échos ECH1-ECH2, la matrice de covariance correspondante qui est cette fois-ci une matrice 2 x 2. Le calcul des valeurs propres (étape 72) se révèle alors particulièrement simple et fournit les deux valeurs propres $\lambda 1$ et $\lambda 2$ qui correspondent aux énergies individuelles pondérées des nouveaux échos virtuels. Et, puisque la matrice de covariance est une matrice 2 x 2, on ne perd pas le lien entre l'écho et sa valeur propre.

Les moyens de calcul effectuent les mêmes opérations (étape 73 et étape 74) pour la paire d'échos ECH4 et ECH5 de façon à obtenir deux valeurs propres λ4 et λ5.

Par ailleurs, la valeur λ6 correspond à l'énergie individuelle initiale de l'écho ECH6.

Puis, puisque N est ici égal à 3, les moyens de sélection vont choisir trois valeurs propres parmi les cinq valeurs propres λ1, λ2, λ4, λ5 et λ6.

Et, ici, le critère de sélection consiste simplement à choisir les trois valeurs propres les plus grandes et par conséquent à sélectionner les trois échos correspondants, que l'on suppose être dans le cas présent les échos ECH1, ECH4 et ECH6.

## Revendications

1. Procédé de traitement au sein d'un récepteur de type « Rake », d'un signal émanant d'un milieu de transmission multitrajets et véhiculant des symboles, chaque symbole étant constitué d'un nombre prédéterminé de fragments, le procédé comprenant une détection d'échos du signal reçu, un traitement de rejet comportant une estimation (700,701) de l'intercorrélation entre des échos temporellement espacés d'une durée inférieure ou égale à la durée d'un fragment, ladite estimation comportant le calcul d'un coefficient d'intercorrélation normalisé obtenu à partir des amplitudes complexes et des énergies des deux échos, et si cette intercorrélation satisfait un test prédéterminé (703) comportant la comparaison du coefficient d'intercorrélation normalisé à un seuil prédéterminé, le rejet (705) de celui des deux échos voisins présentant l'énergie la plus faible.

2. Procédé selon la revendication 1, **caractérisé par le fait que** le signal reçu véhicule des symboles au sein de trames successives (FRi), chaque trame étant subdivisée en un certain nombre d'intervalles temporels (SLi), et **par le fait qu'**on effectue l'estimation de l'intercorrélation sur un nombre choisi (NIT) d'intervalles temporels.

3. Procédé selon la revendication 2, **caractérisé par le fait que** ledit nombre choisi d'intervalles temporels (NIT) est de l'ordre de la centaine.

4. Procédé selon l'une des revendications précédentes, **caractérisé par le fait que** le nombre d'échos détectés est supérieur au nombre de doigts d'un récepteur Rake, **par le fait que** le nombre d'échos résiduels après rejet (N) correspond au nombre de doigts (N) du récepteur Rake, et **par le fait qu'**on alloue respectivement ces échos résiduels aux doigts du récepteur Rake.

5. Procédé selon l'une des revendications 1 à 3, **caractérisé par le fait que** le nombre d'échos détectés (ECH1-ECH6) du signal reçu est égal à L0, L0 étant supérieur au nombre N de doigts d'un récepteur « Rake », **par le fait que** le nombre d'échos résiduels issus du traitement de rejet est égal à L, L étant supérieur à N, **par le fait que** certains au moins (ECH1-ECH5) des L échos résiduels sont des échos temporellement corrélés selon un critère de corrélation prédéterminé, et **par le fait que** l'étape de sélection comporte une détermination à partir des amplitudes complexes initiales associées à au moins les échos temporellement corrélés, d'énergies individuelles pondérées (λ1-λ6) correspondant respectivement à des échos virtuels temporellement décorrélés, et la sélection parmi les L échos de N échos (ECH1, ECH4, ECH6) en fonction d'un critère de puissance prédéterminé prenant en compte au moins lesdites énergies individuelles pondérées.

6. Procédé selon la revendication 5, **caractérisé par le fait qu'**on détermine des énergies individuelles pondérées à partir des amplitudes complexes initiales de l'ensemble des L échos.

7. Procédé selon la revendication 5 ou 6, **caractérisé par le fait que** dans l'étape de sélection on définit (61) toutes les combinaisons possibles de N échos parmi les L échos, et pour chacune des combinaisons (CMBj), on calcule (63,64) un jeu de N énergies individuelles pondérées à partir des amplitudes complexes initiales des N échos de ladite combinaison, ainsi que la somme (Sj) de ces N énergies individuelles pondérées, et on sélectionne (67) la combinaison de N échos dont ladite somme associée est la plus grande.

8. Procédé selon la revendication 7, **caractérisé par le fait que** le calcul du jeu de N énergies individuelles pondérées associé à une combinaison de N échos, comporte la détermination de la matrice de covariance (Kj) des amplitudes complexes initiales desdits N échos, et la détermination des N valeurs propres de ladite matrice de covariance.

9. Procédé selon la revendication 5, **caractérisé par le fait que** les L échos comportant L1 échos temporellement corrélés, et L-L1 échos éventuels restants dits éloignés, L1 étant supérieur ou égal à 2 et inférieur ou égal à L, l'étape de sélection comporte une première sélection (70) selon un premier critère de sélection de L2 échos parmi les L1 échos, L2 étant inférieur ou égal à L1, une détermination à partir des amplitudes complexes initiales des L2 échos des énergies individuelles pondérées correspondant respectivement à des échos virtuels temporellement décorrélés, une affection de ces énergies individuelles pondérées aux L2 échos sélectionnés, et la sélection (75) parmi les L2 échos et les L-L1 échos éloignés, des N échos en fonction d'un critère de puissance prédéterminé prenant en compte lesdites énergies individuelles pondérées et les L-L1 énergies individuelles des L-L1 échos restants.

10. Procédé selon la revendication 9, **caractérisé par le fait que** dans le cas où L1 est un nombre impair, on élimine (70) au moins un des L1 échos temporellement corrélés, de façon à obtenir un nombre L2 pair.

11. Procédé selon la revendication 10, **caractérisé par le fait qu'**on traite les L2 échos par paire, **par le fait que** pour chaque paire d'échos on calcule une paire d'énergies individuelles pondérées (λ) à partir des amplitudes complexes initiales de la paire d'échos, et **par le fait qu'**on sélectionne les N échos ayant les N plus grandes valeurs d'énergie parmi les L2 énergies individuelles pondérées et les L-L1 énergies individuelles initiales des éventuels L-L1 échos éloignés.

12. Procédé selon la revendication 11, **caractérisé par le fait que** le calcul d'une paire d'énergies individuelles pondérées associée à une paire d'échos, comporte la détermination de la matrice de covariance des amplitudes complexes initiales desdits échos, et la détermination des 2 valeurs propres de ladite matrice de covariance.

13. Procédé selon l'une des revendications 5 à 12, **caractérisé par le fait que** le signal reçu véhicule des symboles, chaque symbole étant constitué d'un nombre prédéterminé de fragments, et **par le fait que** deux échos sont déclarés temporellement corrélés lorsqu'il sont temporellement espacés d'une durée inférieure ou égale à la durée d'un fragment.

14. Récepteur du type « Rake », comprenant une entrée pour recevoir un signal émanant d'un milieu de transmission multitrajets et véhiculant des symboles, chaque symbole étant constitué d'un nombre prédéterminé de fragments, des moyens de détection d'échos du signal reçu, des moyens de traitement (MTS) comportant des moyens d'estimation (MST) comportant des moyens aptes à calculer un coefficient d'intercorrélation normalisé obtenu à partir des amplitudes complexes et des énergies des deux échos, de façon à effectuer une estimation de l'intercorrélation entre des échos temporellement espacés d'une durée inférieure ou égale à la durée d'un fragment, et des moyens de rejet (MRJ) comportant des moyens de comparaison aptes à comparer le coefficient d'intercorrélation normalisé à un seuil prédéterminé, de façon, si cette intercorrélation satisfait un test prédéterminé, à rejeter celui des deux échos voisins présentant l'énergie la plus faible.

15. Récepteur selon la revendication 14, **caractérisé par le fait que** le signal reçu véhicule des symboles au sein de trames successives, chaque trame étant subdivisée en un certain nombre d'intervalles temporels, et **par le fait que** les moyens d'estimation sont aptes à effectuer l'estimation de l'intercorrélation sur un nombre choisi d'intervalles temporels.

16. Récepteur selon la revendication 15, **caractérisé par le fait que** ledit nombre choisi d'intervalles temporels (NIT) est de l'ordre de la centaine.

17. Récepteur selon l'une des revendications 14 à 16, **caractérisé par le fait que** le nombre d'échos détectés est supérieur au nombre de doigts d'un récepteur Rake, **par le fait que** le nombre d'échos résiduels après rejet correspond au nombre de doigts du récepteur Rake, et **par le fait que** les moyens de traitement comportent une unité (RMU) apte à allouer respectivement ces échos résiduels aux doigts du récepteur Rake.

18. Récepteur selon l'une des revendications 14 à 17, **caractérisé par le fait que** les moyens de détection détectent un nombre L0 d'échos du signal reçu, L0 étant supérieur au nombre N de doigts du récepteur « Rake », **par le fait que** les moyens de rejet délivrent L échos, L étant également supérieur à N, **par le fait que** certains au moins des L échos sont des échos temporellement corrélés selon un critère de corrélation prédéterminé, et **par le fait que** les moyens de traitement (MTS) comportent des moyens de calcul (MC) aptes à déterminer à partir des amplitudes complexes initiales associées à au moins les échos temporellement corrélés, des énergies individuelles pondérées correspondant respectivement à des échos virtuels temporellement décorrélés, et des moyens de sélection (MS) aptes à sélectionner N échos parmi les L échos en fonction d'un critère de puissance prédéterminé prenant en compte au moins lesdites énergies individuelles pondérées.

19. Récepteur selon la revendication 18, **caractérisé par le fait que** les moyens de calcul (MC) sont aptes à déterminer des énergies individuelles pondérées à partir des amplitudes complexes initiales de l'ensemble des L échos.

20. Récepteur selon la revendication 18 ou 19, **caractérisé par le fait que** les moyens de calcul sont aptes à définir toutes les combinaisons possibles de N échos parmi les L échos, et pour chacune des combinaisons, à calculer un jeu de N énergies individuelles pondérées à partir des amplitudes complexes initiales des N échos de ladite combinaison, ainsi que la somme de ces N énergies individuelles pondérées, et **par le fait que** les moyens de sélection (MS) sélectionnent la combinaison de N échos dont ladite somme associée est la plus grande.

**21.** Récepteur selon la revendication 20, **caractérisé par le fait que** les moyens de calcul (MC) sont aptes, pour le calcul du jeu de N énergies individuelles pondérées associé à une combinaison de N échos, à déterminer la matrice de covariance des amplitudes complexes initiales desdits N échos, et à déterminer les N valeurs propres de ladite matrice de covariance.

**22.** Récepteur selon la revendication 18, **caractérisé par le fait que** les L échos comportant L1 échos temporellement corrélés, et L-L1 échos éventuels restants dits éloignés, L1 étant supérieur ou égal à 2 et inférieur ou égal à L, les moyens de traitement comportent des moyens de sélection auxiliaires (MSA) aptes à effectuer une première sélection selon un premier critère de sélection de L2 échos parmi les L1 échos, L2 étant inférieur ou égal à L1, **par le fait que** les moyens de calcul (MC) sont aptes à déterminer à partir des amplitudes complexes initiales des L2 échos, des énergies individuelles pondérées correspondant respectivement à des échos virtuels temporellement décorrélés et à affecter ces énergies individuelles pondérées aux L2 échos sélectionnés, et **par le fait que** les moyens de sélection (MS) sont aptes à sélectionner les N échos parmi les L2 échos et les L-L1 échos éloignés, en fonction d'un critère de puissance prédéterminé prenant en compte lesdites énergies individuelles pondérées et les L-L1 énergies individuelles initiales des L-L1 échos restants.

**23.** Récepteur selon la revendication 22, **caractérisé par le fait que** dans le cas où L1 est un nombre impair, les moyens de sélection auxiliaires (MSA) sont aptes à éliminer au moins un des L1 échos temporellement corrélés, de façon à obtenir un nombre L2 pair.

**24.** Récepteur selon la revendication 23, **caractérisé par le fait que** les moyens de calcul (MC) sont aptes à traiter les L2 échos par paire, **par le fait que** pour chaque paire d'échos, les moyens de calcul sont aptes à calculer une paire d'énergies individuelles pondérées à partir des amplitudes complexes initiales de la paire d'échos, et **par le fait que** les moyens de sélection (MS) sélectionnent les N échos ayant les N plus grandes valeurs d'énergie parmi les L2 énergies individuelles pondérées et les L-L1 énergies individuelles initiales des éventuels L-L1 échos éloignés.

**25.** Récepteur selon la revendication 24, **caractérisé par le fait que** pour le calcul d'une paire d'énergies individuelles pondérées associée à une paire d'échos, les moyens de calcul (MC) sont aptes à déterminer la matrice de covariance des amplitudes complexes initiales desdits échos, et à déterminer les 2 valeurs propres de ladite matrice de covariance.

**26.** Récepteur selon l'une des revendications 18 à 25, **caractérisé par le fait que** le signal reçu véhicule des symboles, chaque symbole étant constitué d'un nombre prédéterminé de fragments, et **par le fait que** deux échos sont déclarés temporellement corrélés lorsqu'il sont temporellement espacés d'une durée inférieure ou égale à la durée d'un fragment.

**27.** Composant d'un système de communication sans fil, **caractérisé par le fait qu'**il incorpore un récepteur selon l'une des revendications 14 à 26.

**28.** Composant selon la revendication 27, **caractérisé par le fait qu'**il forme un téléphone mobile cellulaire.

**Claims**

**1.** Method of processing, within a receiver of the "Rake" type, a signal emanating from a multipath transmission medium and conveying symbols, each symbol consisting of a predetermined number of chips, the method comprising a detection of echoes of the signal received, a rejection processing comprising an estimation (700, 701) of the cross-correlation between echoes, spaced apart temporally by a duration less than or equal to the duration of a chip, the said estimation comprising the calculation of a normalized cross-correlation coefficient obtained with the help of the complex amplitudes and of the energies of the two echoes, and if this cross-correlation satisfies a predetermined test (703) comprising the comparison of the normalized cross-correlation coefficient with a predetermined threshold, the rejection (705) of that of the two neighbouring echoes exhibiting the lower energy.

**2.** Method according to Claim 1, **characterized in that** the signal received conveys symbols within successive frames (FRi), each frame being subdivided into a certain number of time slots (SLi), and **in that** the estimation of the cross-correlation is performed over a chosen number (NIT) of time slots.

**3.** Method according to Claim 2, **characterized in that** the said chosen number of time slots (NIT) is of the order of a hundred.

**4.** Method according to one of the preceding claims, **characterized in that** the number of echoes detected is greater than the number of fingers of a Rake receiver, **in that** the number of residual echoes after rejection (N) corresponds to the number of fingers (N) of the Rake receiver, and **in that** these residual echoes are allocated respectively to the fingers of the Rake receiver.

5. Method according to one of Claims 1 to 3, **characterized in that** the number of echoes detected (ECH1-ECH6) of the signal received is equal to L0, L0 being greater than the number N of fingers of a "Rake" receiver, **in that** the number of residual echoes arising from the rejection processing is equal to L, L being greater than N, **in that** some at least (ECH1-ECH5) of the L residual echoes are echoes temporally correlated according to a predetermined correlation criterion, and **in that** the selection step comprises a determination with the help of the initial complex amplitudes associated with at least the temporally correlated echoes, of weighted individual energies ($\lambda$1-$\lambda$6) corresponding respectively to temporally decorrelated virtual echoes, and the selection from among the L echoes of N echoes (ECH1, ECH4, ECH6) as a function of a predetermined power criterion taking into account at least the said weighted individual energies.

6. Method according to Claim 5, **characterized in that** weighted individual energies are determined with the help of the initial complex amplitudes of the whole set of the L echoes.

7. Method according to Claim 5 or 6, **characterized in that** in the selection step all the possible combinations of N echoes from among the L echoes are defined (61), and for each of the combinations (CMBj), a set of N weighted individual energies is calculated (63, 64) with the help of the initial complex amplitudes of the N echoes of the said combination, as is the sum (Sj) of these N weighted individual energies, and the combination of N echoes whose said associated sum is the largest is selected (67).

8. Method according to Claim 7, **characterized in that** the calculation of the set of N weighted individual energies which is associated with a combination of N echoes, comprises the determination of the covariance matrix (Kj) of the initial complex amplitudes of the said N echoes, and the determination of the N eigenvalues of the said covariance matrix.

9. Method according to Claim 5, **characterized in that** the L echoes comprising L1 temporally correlated echoes, and L-L1 possible remaining so-called far echoes, L1 being greater than or equal to 2 and less than or equal to L, the selection step comprises a first selection (70) according to a first selection criterion of L2 echoes from among the L1 echoes, L2 being less than or equal to L1, a determination with the help of the initial complex amplitudes of the L2 echoes of the weighted individual energies corresponding respectively to temporally decorrelated virtual echoes, an assignment of these weighted individual energies to the L2 selected echoes, and the selection (75) from among the L2 echoes and the L-L1 far echoes, of the N echoes as a function of a predetermined power criterion taking into account said weighted individual energies and the L-L1 individual energies of the L-L1 remaining echoes.

10. Method according to Claim 9, **characterized in that** in the case where L1 is an odd number, at least one of the L1 temporally correlated echoes is eliminated (70), in such a way as to obtain an even number L2.

11. Method according to Claim 10, **characterized in that** the L2 echoes are processed pairwise, **in that** for each pair of echoes a pair of weighted individual energies ($\lambda$) is calculated with the help of the initial complex amplitudes of the pair of echoes, and **in that** the N echoes having the N largest energy values from among the L2 weighted individual energies and the L-L1 initial individual energies of the possible L-L1 far echoes are selected.

12. Method according to Claim 11, **characterized in that** the calculation of a pair of weighted individual energies which is associated with a pair of echoes, comprises the determination of the covariance matrix of the initial complex amplitudes of the said echoes, and the determination of the 2 eigenvalues of the said covariance matrix.

13. Method according to one of Claims 5 to 12, **characterized in that** the signal received conveys symbols, each symbol consisting of a predetermined number of chips, and **in that** two echoes are declared to be temporally correlated when they are spaced apart temporally by a duration less than or equal to the duration of a chip.

14. Receiver of the "Rake" type, comprising an input for receiving a signal emanating from a multipath transmission medium and conveying symbols, each symbol consisting of a predetermined number of chips, means of detection of echoes of the signal received, processing means (MTS) comprising estimation means (MST) comprising means able to calculate a normalized cross-correlation coefficient obtained with the help of the complex amplitudes and of the energies of the two echoes, so as to perform an estimation of the cross-correlation between echoes spaced apart temporally by a duration less than or equal to the duration of a chip, and rejection means (MRJ) comprising comparison means able to compare the normalized cross-correlation coefficient with a predetermined threshold, so as, if this cross-correlation satisfies a predetermined test, to reject that of the two neighbouring echoes exhibiting the lower energy.

**15.** Receiver according to Claim 14, **characterized in that** the signal received conveys symbols within successive frames, each frame being subdivided into a certain number of time slots, and **in that** the estimation means are able to perform the estimation of the cross-correlation over a chosen number of time slots.

**16.** Receiver according to Claim 5, **characterized in that** the said chosen number of time slots (NIT) is of the order of a hundred.

**17.** Receiver according to one of Claims 14 to 16, **characterized in that** the number of echoes detected is greater than the number of fingers of a Rake receiver, **in that** the number of residual echoes after rejection corresponds to the number of fingers of the Rake receiver, and **in that** the processing means comprise a unit (RMU) able to respectively allocate these residual echoes to the fingers of the Rake receiver.

**18.** Receiver according to one of Claims 14 to 17, **characterized in that** the detection means detect a number L0 of echoes of the signal received, L0 being greater than the number N of fingers of the "Rake" receiver, **in that** the rejection means deliver L echoes, L being likewise greater than N, **in that** some at least of the L echoes are echoes temporally correlated according to a predetermined correlation criterion, and **in that** the processing means (MTS) comprise calculation means (MC) able to determine with the help of the initial complex amplitudes associated with at least the temporally correlated echoes, weighted individual energies corresponding respectively to temporally decorrelated virtual echoes, and selection means (MS) able to select N echoes from among the L echoes as a function of a predetermined power criterion taking into account at least the said weighted individual energies.

**19.** Receiver according to Claim 18, **characterized in that** the calculation means (MC) are able to determine weighted individual energies with the help of the initial complex amplitudes of the whole set of the L echoes.

**20.** Receiver according to Claim 18 or 19, **characterized in that** the calculation means are able to define all the possible combinations of N echoes from among the L echoes, and for each of the combinations, to calculate a set of N weighted individual energies with the help of the initial complex amplitudes of the N echoes of the said combination, and also the sum of these N weighted individual energies, and **in that** the selection means (MS) select the combination of N echoes whose said associated sum is the largest.

**21.** Receiver according to Claim 20, **characterized in that** the calculation means (MC) are able, for the calculation of the set of N weighted individual energies which is associated with a combination of N echoes, to determine the covariance matrix of the initial complex amplitudes of the said N echoes, and to determine the N eigenvalues of the said covariance matrix.

**22.** Receiver according to Claim 18, **characterized in that** the L echoes comprising L1 temporally correlated echoes, and L-L1 possible remaining so-called far echoes, L1 being greater than or equal to 2 and less than or equal to L, the processing means comprise auxiliary selection means (MSA) able to perform a first selection according to a first selection criterion of L2 echoes from among the L1 echoes, L2 being less than or equal to L1 **in that** the calculation means (MC) are able to determine, with the help of the initial complex amplitudes of the L2 echoes, weighted individual energies corresponding respectively to temporally decorrelated virtual echoes, and to assign these weighted individual energies to the L2 selected echoes and **in that** selection means (MS) are able to select the N echoes from among the L2 echoes and the L-L1 far echoes, as a function of a predetermined power criterion taking into account said weighted individual energies and the L-L1 initial individual energies of the L-L1 remaining echoes.

**23.** Receiver according to Claim 22, **characterized in that** in the case where L1 is an odd number the auxiliary selection means (MSA) are able to eliminate, at least one of the L1 temporally correlated echoes, in such a way as to obtain an even number L2.

**24.** Receiver according to Claim 23, **characterized in that** the calculation means (MC) are able to process the L2 echoes pairwise, **in that** for each pair of echoes, the calculation means are able to calculate a pair of weighted individual energies with the help of the initial complex amplitudes of the pair of echoes, and **in that** the selection means (MS) select the N echoes having the N largest energy values from among the L2 weighted individual energies and the L-L1 initial individual energies of the possible L-L1 far echoes.

**25.** Receiver according to Claim 24, **characterized in that** for the calculation of a pair of weighted individual energies which is associated with a pair of echoes, the calculation means (MC) are able to determine the covariance matrix of the initial complex amplitudes of the said echoes, and to determine the 2 eigenvalues of the said covariance matrix.

**26.** Receiver according to one of Claims 18 to 25, **characterized in that** the signal received conveys symbols, each symbol consisting of a predetermined number of chips, and **in that** two echoes are declared to be temporally correlated when they are spaced apart temporally by a duration less than or equal to the duration of a chip.

27. Component of a wireless communication system, **characterized in that** it incorporates a receiver according to one of Claims 14 to 26.

28. Component according to Claim 27, **characterized in that** it forms a cellular mobile telephone.

**Patentansprüche**

1. Verfahren, um in einem Empfänger des "RAKE"-Typs ein Signal zu bearbeiten, das von einem Mehrwege-Übertragungsmedium stammt und Symbole transportiert, wobei jedes Symbol aus einer vorgegebenen Anzahl von Fragmenten gebildet ist, wobei das Verfahren eine Erfassung von Echos des empfangenen Signals und eine Zurückweisungsverarbeitung enthält, die ihrerseits eine Schätzung (700, 701) der Interkorrelation zwischen Echos, die zeitlich um eine Dauer beabstandet sind, die kleiner oder gleich einer Dauer eines Fragments ist, wobei die Schätzung das Berechnen eines anhand der komplexen Amplituden und der Energien der zwei Echos erhaltenen normierten Interkorrelationskoeffizienten enthält, und, falls diese Interkorrelation einen vorgegebenen Test (703) besteht, der den Vergleich des normierten Interkorrelationskoeffizienten mit einem vorgegebenen Schwellenwert enthält, die Zurückweisung (705) jenes der zwei benachbarten Echos, das die geringste Energie aufweist, enthält.

2. Verfahren nach Anspruch 1, **dadurch gekennzeichnet, dass** das empfangene Signal Symbole in aufeinander folgenden Rahmen (FRi) transportiert, wobei jeder Rahmen in eine bestimmte Anzahl zeitlicher Intervalle (SLi) unterteilt ist, und dass die Schätzung der Interkorrelation an einer gewählten Anzahl (NIT) zeitlicher Intervalle ausgeführt wird.

3. Verfahren nach Anspruch 2, **dadurch gekennzeichnet, dass** die gewählte Anzahl zeitlicher Intervalle (NIT) in der Größenordnung von Hundert liegt.

4. Verfahren nach einem der vorhergehenden Ansprüche, **dadurch gekennzeichnet, dass** die Anzahl erfasster Echos größer als die Anzahl von Fingern eines Rake-Empfängers ist, dass die Anzahl verbleibender Echos nach der Zurückweisung (N) der Anzahl von Fingern (N) des Rake-Empfängers entspricht und dass diese verbleibenden Echos jeweils den Fingern des Rake-Empfängers zugewiesen werden.

5. Verfahren nach einem der Ansprüche 1 bis 3, **dadurch gekennzeichnet, dass** die Anzahl erfasster Echos (ECH1-ECH6) des empfangenen Signals gleich L0 ist, wobei L0 größer als die Anzahl N von Fingern eines "Rake"-Empfängers ist, dass die Anzahl verbleibender Echos, die von der Zurückweisungsverarbeitung ausgegeben werden, gleich L ist, wobei L größer als N ist, dass wenigstens bestimmte Echos (ECH1-ECH5) der L verbleibenden Echos Echos sind, die gemäß einem vorgegebenen Korrelationskriterium zeitlich korreliert sind, und dass der Auswahlschritt eine Bestimmung einzelner gewichteter Energien ($\lambda 1$-$\lambda 6$), die jeweils den zeitlich nicht korrelierten virtuellen Echos entsprechen, anhand der anfänglichen komplexen Amplituden, die wenigstens den zeitlich korrelierten Echos zugewiesen sind, und die Auswahl aus den L Echos von N Echos (ECH1, ECH4, ECH6) als Funktion eines vorgegebenen Leistungskriteriums, das wenigstens die gewichteten einzelnen Energien berücksichtigt, enthält.

6. Verfahren nach Anspruch 5, **dadurch gekennzeichnet, dass** die gewichteten einzelnen Energien anhand der anfänglichen komplexen Amplituden der Gesamtheit der L Echos bestimmt werden.

7. Verfahren nach Anspruch 5 oder 6, **dadurch gekennzeichnet, dass** im Auswahlschritt alle möglichen Kombinationen von N Echos aus den L Echos definiert werden (61) und für jede der Kombinationen (CMBj) ein Satz von N gewichteten einzelnen Energien anhand der anfänglichen komplexen Amplituden der N Echos der Kombination sowie die Summe (Sj) dieser N gewichteten einzelnen Energien berechnet werden (63, 64) und die Kombination von N Echos, deren zugeordnete Summe am größten ist, ausgewählt wird (67).

8. Verfahren nach Anspruch 7, **dadurch gekennzeichnet, dass** die Berechnung des Satzes von N gewichteten einzelnen Energien, der einer Kombination von N Echos zugeordnet ist, die Bestimmung der Kovarianzmatrix (Kj) der anfänglichen komplexen Amplituden der N Echos und die Bestimmung der N Eigenwerte der Kovarianzmatrix enthält.

9. Verfahren nach Anspruch 5, **dadurch gekennzeichnet, dass** die L Echos, die L1 zeitlich korrelierte Echos und L - L1 eventuell verbleibende so genannte entfernte Echos enthalten, wobei L1 größer oder gleich 2 und kleiner oder gleich L ist, dass der Auswahlschritt eine erste Auswahl (70) gemäß einem ersten Auswahlkriterium von L2 Echos aus den L1 Echos, wobei L2 kleiner oder gleich L1 ist, eine Bestimmung anhand der anfänglichen komplexen Amplituden der L2 Echos der gewichteten einzelnen Energien, die jeweils den zeitlich nicht korrelierten virtuellen Echos entsprechen, eine Zuweisung dieser gewichteten einzelnen Energien zu den L2 ausgewählten Echos und die Auswahl (75) der N Echos aus den L2 Echos und den L - L1 entfernten Echos als Funktion eines vorgegebenen Leistungskriteriums, das die gewichteten einzelnen Energien und die L - L1 einzelnen Energien der L - L1 verbleibenden Echos berücksichtigt, enthält.

10. Verfahren nach Anspruch 9, **dadurch gekennzeichnet, dass** in dem Fall, in dem L1 eine ungerade Zahl ist, wenigstens eines der L1 zeitlich korrelierten Echos beseitigt wird (70), derart, dass eine gerade Anzahl L2 erhalten wird.

11. Verfahren nach Anspruch 10, **dadurch gekennzeichnet, dass** die L2 Echos paarweise verarbeitet werden, dass für jedes Paar von Echos ein Paar gewichteter einzelner Energien (λ) anhand der anfänglichen komplexen Amplituden des Paars von Echos berechnet wird und dass die N Echos, die die N größten Werte der Energie aus den L2 gewichteten einzelnen Energien und den L - L1 anfänglichen einzelnen Energien der eventuellen entfernten L - L1 Echos gewählt werden.

12. Verfahren nach Anspruch 11, **dadurch gekennzeichnet, dass** die Berechnung eines Paars gewichteter einzelner Energien, das einem Paar von Echos zugeordnet ist, die Bestimmung der Kovarianzmatrix der anfänglichen komplexen Amplituden dieser Echos und die Bestimmung von 2 Eigenwerten der Kovarianzmatrix enthält.

13. Verfahren nach einem der Ansprüche 5 bis 12, **dadurch gekennzeichnet, dass** das empfangene Signal Symbole transportiert, wobei jedes Symbol aus einer vorgegebenen Anzahl von Fragmenten gebildet ist, und dass zwei Echos für zeitlich korreliert erklärt werden, wenn sie zeitlich um eine Dauer beabstandet sind, die kleiner oder gleich der Dauer eines Fragments ist.

14. Empfänger des "Rake"-Typs, mit einem Eingang, um ein von einem Mehrwege-Übertragungsmedium stammendes Signal, das Symbole transportiert, zu empfangen, wobei jedes Symbol aus einer vorgegebenen Anzahl von Fragmenten gebildet ist, Mitteln zum Erfassen von Echos des empfangenen Signals, Verarbeitungsmitteln (MTS), die Schätzmittel (MST) enthalten, die Mittel enthalten, die einen normierten Interkorrelationskoeffizienten berechnen können, der anhand der komplexen Amplituden und der Energien von zwei Echos erhalten wird, derart, dass eine Schätzung der Interkorrelation zwischen Echos ausgeführt wird, die zeitlich um eine Dauer beabstandet sind, die kleiner oder gleich der Dauer eines Fragments ist, und Zurückweisungsmitteln (MRJ), die Vergleichsmittel enthalten, die den normierten Interkorrelationskoeffizienten mit einem vorgegebenen Schwellenwert vergleichen können, derart, dass dann, wenn diese Interkorrelation einen vorgegebenen Test besteht, jenes der zwei benachbarten Echos zurückgewiesen wird, das die geringste Energie aufweist.

15. Empfänger nach Anspruch 14, **dadurch gekennzeichnet, dass** das empfangene Signal Symbole in aufeinander folgenden Rahmen transportiert, wobei jeder Rahmen in eine bestimmte Anzahl zeitlicher Intervalle unterteilt ist, und dass die Schätzmittel die Schätzung der Interkorrelation an einer gewählten Anzahl zeitlicher Intervalle ausführen können.

16. Empfänger nach Anspruch 15, **dadurch gekennzeichnet, dass** die gewählte Anzahl zeitlicher Intervalle (NIT) in der Größenordnung von Hundert liegt.

17. Empfänger nach einem der Ansprüche 14 bis 16, **dadurch gekennzeichnet, dass** die Anzahl erfasster Echos größer als die Anzahl von Fingern eines Rake-Empfängers ist, dass die Anzahl verbleibender Echos nach der Zurückweisung der Anzahl von Fingern des Rake-Empfängers entspricht und dass die Verarbeitungsmittel eine Einheit (RMU) enthalten, die diese verbleibenden Echos jeweils den Fingern des Rake-Empfängers zuweisen können.

18. Empfänger nach einem der Ansprüche 14 bis 17, **dadurch gekennzeichnet, dass** die Erfassungsmittel eine Anzahl L0 von Echos des empfangenen Signals erfassen können, wobei L0 größer als die Anzahl N von Fingern des "Rake"-Empfängers ist, dass die Zurückweisungsmittel L Echos liefern, wobei L ebenfalls größer als N ist, dass wenigstens bestimmte Echos der L Echos Echos sind, die gemäß einem vorgegebenen Korrelationskriterium zeitlich korreliert sind, und dass die Verarbeitungsmittel (MTS) Rechenmittel (MC) enthalten, die anhand der anfänglichen komplexen Amplituden, die wenigstens den zeitlich korrelierten Echos zugeordnet sind, gewichtete einzelne Energien bestimmen können, die jeweils den zeitlich nicht korrelierten virtuellen Echos entsprechen, und Auswahlmittel (MS) enthalten, die N Echos aus den L Echos als Funktion eines vorgegebenen Leistungskriteriums, das wenigstens die gewichteten einzelnen Energien berücksichtigt, auswählen können.

19. Empfänger nach Anspruch 18, **dadurch gekennzeichnet, dass** die Rechenmittel (MC) gewichtete einzelne Energien anhand der anfänglichen komplexen Amplituden von allen L Echos bestimmen können.

20. Empfänger nach Anspruch 18 oder 19, **dadurch ge-**

**kennzeichnet, dass** die Rechenmittel alle möglichen Kombinationen von N Echos aus den L Echos definieren können und für jede der Kombinationen einen Satz von N gewichteten einzelnen Energien anhand der anfänglichen komplexen Amplituden der N Echos der Kombination sowie die Summe dieser N gewichteten einzelnen Energien berechnen können und dass die Auswahlmittel (MS) jene Kombination von N Echos auswählen, deren zugeordnete Summe am größten ist.

21. Empfänger nach Anspruch 20, **dadurch gekennzeichnet, dass** die Rechenmittel (MC) für die Berechnung des Satzes von N gewichteten einzelnen Energien, der einer Kombination von N Echos zugeordnet ist, die Kovarianzmatrix der anfänglichen komplexen Amplituden dieser N Echos bestimmen können und die N Eigenwerte der Kovarianzmatrix bestimmen können.

22. Empfänger nach Anspruch 18, **dadurch gekennzeichnet, dass** dann, wenn die L Echos L1 zeitlich korrelierte Echos und L - L1 eventuell verbleibende so genannte entfernte Echos enthalten, wobei L1 größer oder gleich 2 und kleiner oder gleich L ist, die Verarbeitungsmittel Hilfsauswahlmittel (MSA) enthalten, die eine erste Auswahl gemäß einem ersten Auswahlkriterium von L2 Echos aus den L1 Echos ausführen können, wobei L2 kleiner oder gleich L1 ist, dass die Rechenmittel (MC) anhand der anfänglichen komplexen Amplituden der L2 Echos gewichtete einzelne Energien bestimmen können, die jeweils den zeitlich nicht korrelierten virtuellen Echos entsprechen, und diese gewichteten einzelnen Energien den ausgewählten L2 Echos zuweisen können, und dass die Auswahlmittel (MS) die N Echos aus den L2 Echos und den L - L1 entfernten Echos als Funktion eines vorgegebenen Leistungskriteriums, das die gewichteten einzelnen Energien und die L - L1 anfänglichen einzelnen Energien der verbleibenden L - L1 Echos berücksichtigt, auswählen können.

23. Empfänger nach Anspruch 22, **dadurch gekennzeichnet, dass** in dem Fall, in dem L1 eine ungerade Anzahl ist, die Hilfsauswahlmittel (MSA) wenigstens eines der L1 zeitlich korrelierten Echos beseitigen können, derart, dass eine gerade Anzahl L2 erhalten wird.

24. Empfänger nach Anspruch 23, **dadurch gekennzeichnet, dass** die Rechenmittel (MC) die L2 Echos paarweise verarbeiten können, dass für jedes Paar von Echos die Rechenmittel ein Paar gewichteter einzelner Energien anhand der anfänglichen komplexen Amplituden des Paars von Echos berechnen können und dass die Auswahlmittel (MS) die N Echos auswählen, die die N größten Werte der Energie von den L2 gewichteten einzelnen Energien und den L - L1 anfänglichen einzelnen Energien der eventuellen L - L1 entfernten Echos haben.

25. Empfänger nach Anspruch 24, **dadurch gekennzeichnet, dass** für die Berechnung eines Paars gewichteter einzelner Energien, das einem Paar von Echos zugeordnet ist, die Rechenmittel (MC) die Kovarianzmatrix der anfänglichen komplexen Amplituden dieser Echos bestimmen können und die 2 Eigenwerte der Kovarianzmatrix bestimmen können.

26. Empfänger nach einem der Ansprüche 18 bis 25, **dadurch gekennzeichnet, dass** das empfangene Signal Symbole transportiert, wobei jedes Symbol aus einer vorgegebenen Anzahl von Fragmenten gebildet ist, und dass zwei Echos für zeitlich korreliert erklärt werden, wenn sie zeitlich um eine Dauer beabstandet sind, die kleiner oder gleich der Dauer eines Fragments ist.

27. Komponente eines drahtlosen Kommunikationssystems, **dadurch gekennzeichnet, dass** sie einen Empfänger nach einem der Ansprüche 14 bis 26 enthält.

28. Komponente nach Anspruch 27, **dadurch gekennzeichnet, dass** sie ein mobiles Zellentelephon bildet.

FIG.1

## FIG.2

## FIG.3

# FIG.4

RR

FG1

FG2

FG6

MCMB

OP

ES

TU

# FIG.5

MTS

FG1

MST

CHU

RMU

MRJ

L0 échos

N échos résiduels

FGN

# FIG.6

SL0 SL1      SL15   SL0      SL15

# FIG.8

CHU

MTS

MST

MRJ

MSA

MC

MS

RMU

FG1

FGN

L0 échos     L échos résiduels     N échos

# FIG.7

Intervalle n :
calcul de
$r(n)=|\ s_1{}^* \cdot s_2\ |$ ___700

Lissage de
R(n) ___701

702

Nombre d'intervalle > NIT
? ___ non

oui

non $\left|\dfrac{R(n)}{\sqrt{E(n,1)\ E(n,2)}} - 1\right| < d$ oui

?

Conservation
des deux
échos ___704

705___ Rejet de
l'un des
deux échos

# FIG.9

$$L_{échos}$$

Définitions des $C_L^N$
combinaisons d'échos $CMB_j$ —61

$$j = 1$$

66

$$j = j+1$$

oui $\quad$ non
$$j \gtrless C_L^N \quad ?$$

62

Max $S_j$ —67

Calcul matrice
de covariance
$K_j$ pour $CMB_j$

63—

$$N_{échos}$$

Détermination des
valeurs propres
$\lambda_{i,j}$

64—

$$65— \quad S_j = \sum_i \lambda_{i,j}$$

# FIG.10

$L_{échos}$

ECH1  ECH2  ECH3    ECH4  ECH5              ECH6

L1                                          L-L1

70

ECH1  ECH2        ECH4  ECH5              ECH6

L2                                          L-L1

Calcul de K — 71          Calcul de K — 73

Calcul valeurs propres — 72          Calcul valeurs propres — 74

$\lambda_1, \lambda_2$          $\lambda_4, \lambda_5$          $\lambda_6$

N=3 ; choix des trois valeurs propres les plus grandes — 75

ECH1, ECH4, ECH6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0211304 A2
- US 20020105375 A1